# EUROPÄISCHE PATENTSCHRIFT

(11) **EP 2 178 719 B1**
(45) Veröffentlichungstag und Bekanntmachung des Hinweises auf die Patenterteilung: **01.12.2010**
(21) Anmeldenummer: 08750226.6
(22) Anmeldetag: 09.05.2008
(51) Int. Cl.: B60Q 1/56, B60R 13/10

(54) **HECKELEMENT FÜR EIN KRAFTFAHRZEUG UMFASSEND EINE BELEUCHTUNGSEINHEIT**
REAR ELEMENT FOR A MOTOR VEHICLE COMPRISING A LIGHTING UNIT
ÉLÉMENT ARRIÈRE POUR UN VÉHICULE AUTOMOBILE COMPORTANT UNE UNITÉ D'ÉCLAIRAGE

(30) Priorität: 23.07.2007 DE 102007034714; 01.08.2007 DE 102007036468
(43) Veröffentlichungstag der Anmeldung: 28.04.2010
(73) Patentinhaber: Evonik Röhm GmbH, 64293 Darmstadt (DE)
(72) Erfinder: SCHRÖBEL, Sven, 64285 Darmstadt (DE); BLASS, Rudolf, 64291 Darmstadt (DE); HALBLÄNDER, Anton, 64347 Griesheim (DE)
(86) Internationale Anmeldenummer: PCT/EP2008/055736
(87) Internationale Veröffentlichungsnummer: WO 2009/013036

(56) Entgegenhaltungen:
- DE-A1- 10 258 465
- DE-A1- 10 332 978
- DE-U1- 29 606 333

## Beschreibung

Die vorliegende Erfindung betrifft ein Heckelement für ein Kraftfahrzeug umfassend eine Beleuchtungseinheit zur Beleuchtung eines Nummernschildes, wobei die Beleuchtungseinheit die Rückseite des Nummernschilds beleuchtet.

Im Allgemeinen werden Nummernschilder von Kraftfahrzeugen durch zwei oder drei Lampen beleuchtet, die oberhalb oder unterhalb des Nummernschilds angebracht sind. Nachteilig ist jedoch, dass das Nummernschild nicht gleichmäßig beleuchtet wird. Darüber hinaus begrenzen die extern ober- und unterhalb des Schildes angebrachten Beleuchtungsmittel die Möglichkeiten das Design des Fahrzeugs zu optimieren.

Darüber hinaus sind Beleuchtungseinrichtungen bekannt, die durch eine rückwärtig angebrachte Lichtquelle das Nummernschild beleuchten. Beispielsweise können Leuchtfolien oder Lichtleitkörper als Lichtquelle verwendet werden. Derartige Ausführungsformen zur Beleuchtung von Nummernschildern sind beispielsweise in den Druckschriften WO 2007/012306, EP-A-1 262 373 und EP-A-1 477 368 beschrieben.

Gemäß der Druckschrift WO 2007/012306 kann der Lichtleitkörper das Nummernschild von vorne, d.h. von der Seite, die vom Fahrzeug abgewandt ist, gesehen, beleuchten. Nachteilig hierbei ist jedoch, dass eine leichte Beschädigung des Lichtleitkörpers zu einer unerwünschten Auskopplung des Lichts führt. Hierdurch nimmt die Lesbarkeit des Schildes deutlich ab. Diese Beschädigungen, die sich in Form von Kratzern zeigen, können beispielsweise durch Steinschlag entstehen, so dass diese nicht vermieden werden können.

Die Druckschrift EP-A-1 262 373 beschreibt ein Nummernschild, welches durch eine rückwärtig angebrachte Lichtfolie beleuchtet wird. Eine Anordnung, die dem in der Druckschrift EP-A-1 262 373 beschriebenen Nummernschild ähnlich ist, wird in der Druckschrift EP-A-1 477 368 dargelegt. In dieser Ausführungsform wird ein Lichtleitkörper zur Beleuchtung des Nummernschilds eingesetzt.

Die in den Druckschriften EP-A-1 262 373 und EP-A-1 477 368 dargelegten Nummernschilder werden auf einem Heckelement, beispielsweise einer Heckklappe oder einem Stoßfänger angebracht, wobei übliche Befestigungsvorrichtungen eingesetzt werden.

Nachteilig ist hierbei jedoch, dass die Beleuchtungseinheit in einem zusätzlichen Arbeitsschritt an das Heckelement angebracht werden muss. Darüber hinaus kann das Beleuchtungselement leicht von dem Heckelement abmontiert werden. Hierbei ist zu berücksichtigen, dass die Beleuchtungseinheiten nachgerüstet werden können und diese Nachrüstsätze gegenwärtig einen hohen Preis erzielen.

Des Weiteren sind die Gestaltungsmöglichkeiten auch bei Verwendung von den in den Druckschriften EP-A-1 262 373 und EP-A-1 477 368 dargestellten Beleuchtungseinrichtungen der Nummernschilder eingeschränkt.

Weiterhin sind die in den Druckschriften EP-A-1 262 373 und EP-A-1 477 368 beschriebenen Beleuchtungseinrichtungen aufwendig in der Herstellung und Montage. Darüber hinaus ist die Auswahl des Leuchtmittels sehr begrenzt, wobei die in EP-A-1 262 373 dargelegte Leuchtfolie sehr teuer ist. Das in EP-A-1 477 368 erfordert ebenfalls ein sehr spezielles Leuchtmittel, welches bei einer hohen Lichtstärke nur einen sehr begrenzten Raum einnehmen darf.

Weiterhin zeigt die DE 10 332 978 A1 ein gattungsgemäßes Heckelement.

In Anbetracht des Standes der Technik war es nun Aufgabe der vorliegenden Erfindung, ein Heckelement für ein Kraftfahrzeug bereitzustellen, das ein hervorragendes Eigenschaftsprofil aufweist. Insbesondere sollte das Beleuchtungselement nicht ohne weiteres von dem Heckelement abmontiert werden können. Darüber hinaus sollte das Beleuchtungselement einen möglichst geringen Einfluss auf die Gestaltung des Heckelements haben, um den Designern vielfältige Möglichkeiten zur Verfügung zu stellen das Kraftfahrzeug zu gestalten.

Eine weitere Aufgabe der Erfindung bestand darin, ein Heckelement für ein Kraftfahrzeug mit einer Beleuchtungseinheit zu schaffen, das besonders einfach und in kurzer Zeit hergestellt werden kann. Hierbei sollte das Heckelement besonders kostengünstig erhalten werden können.

Darüber hinaus war es mithin eine Aufgabe der vorliegenden Erfindung ein Heckelement der zuvor dargelegten Art bereitzustellen, dessen Leuchtmittel frei gewählt werden kann.

Gelöst werden diese sowie weitere nicht explizit genannte Aufgaben, die jedoch aus den hierin einleitend diskutierten Zusammenhängen ohne Weiteres ableitbar oder erschließbar sind, durch ein Heckelement für ein Kraftfahrzeug mit einer Beleuchtungseinheit mit allen Merkmalen des Patentanspruchs 1. Zweckmäßige Abwandlungen des erfindungsgemäßen Heckelements werden in den auf Anspruch 1 rückbezogenen abhängigen Ansprüchen unter Schutz gestellt.

Gegenstand der vorliegenden Erfindung ist dementsprechend ein Heckelement für ein Kraftfahrzeug umfassend eine Beleuchtungseinheit zur Beleuchtung eines Nummernschildes, wobei die Beleuchtungseinheit die Rückseite des Nummernschilds beleuchtet und die Beleuchtungseinheit einen transluzenten Körper und ein Leuchtmittel aufweist, welches dadurch gekennzeichnet ist, dass der transluzente Körper der Beleuchtungseinheit über die Seitenflächen in das Heckelement eingefügt ist.

Hierdurch gelingt es auf nicht vorhersehbare Weise ein Heckelement für ein Kraftfahrzeug zur Verfügung zu stellen, das die zuvor dargelegten hervorragenden Eigenschaften aufweist. Überraschend ermöglichen die erfindungsgemäßen Maßnahmen ein Heckelement umfassend eine Beleuchtungseinheit zur Beleuchtung eines Nummernschildes bereitzustellen, wobei das Beleuchtungselement nicht von dem Heckelement abmontiert werden kann. Von besonderem, nicht ohne weiteres vorhersehbarem Vorteil ist hierbei, dass eine Beleuchtungseinheit zur Beleuchtung eines Nummernschildes sehr geringen Einfluss auf die Gestaltung des Heckelements hat. Hierdurch können die Designer die Heckpartie des Fahrzeugs auf vielfältige Weise gestalten.

Weiterhin gelingt es durch die erfindungsgemäßen Maßnahmen ein Heckelement für ein Kraftfahrzeug mit einer Beleuchtungseinheit zu schaffen, das besonders einfach und in kurzer Zeit hergestellt werden kann. Hierbei kann das Heckelement besonders kostengünstig erhalten werden. In diesem Zusammenhang ist insbesondere die Materialersparnis zu berücksichtigen, die in Zeiten von Rohstoffknappheit und Gewichtsersparnis, die zu einer Reduktion des Kraftstoffverbrauchs beiträgt, ein überraschendes und vorteilhaftes Element der vorliegenden Erfindung darstellt.

Weiterhin kann das Leuchtmittel zur Beleuchtung des Nummernschilds frei gewählt werden, wobei auch herkömmliche Glühbirnen eingesetzt werden können. Dieser besondere Vorteil kann insbesondere dadurch erzielt werden, dass die Einbautiefe der Beleuchtungseinheit keiner besonderen Beschränkung unterliegt.

Die vorliegende Erfindung betrifft insbesondere ein Heckelement für ein Kraftfahrzeug. Der Begriff "Heckelement" beschreibt insbesondere ein Bauteil des Hecks von Kraftfahrzeugen, das zum Design beiträgt. Hierzu gehören insbesondere die Heckklappe sowie der Stoßfänger des Fahrzeugs oder ein an dem Fahrzeug angebrachter Heckspoiler. Dementsprechend dient dieser Begriff insbesondere zur Abgrenzung üblicher Befestigungselemente, die beispielsweise als Halterung herkömmlicher Nummernschilder eingesetzt werden.

Diese Heckelemente können beispielsweise aus Metall, insbesondere Stahl, und/oder Kunststoff hergestellt werden. Zu den bevorzugten Kunststoffen zur Herstellung des Heckelements gehören unter anderem Polyolefine, insbesondere Polyethylen, Polypropylen oder Cycloolefincopolymer; Polyacetale, insbesondere Polyoxymethylen; Polyamid; Polyphenylenoxid; Polyphenylensulfid; Polyphenylenether; Polyurethan; Polycarbonat; Polyester, insbesondere Polyethylenterephthalat oder Polybutylenterephthalat; Polystyrol; Poly(meth)acrylate, insbesondere Polymethylmethacrylat (PMMA), Acrylnitril-Butadien-Styrol-Copolymere oder Acrylnitril-Styrol-Acrylester-Pfropfpolymeren, wobei diese Kunststoffe schlagzäh ausgestaltet sein können.

Das erfindungsgemäße Heckelement umfasst eine Beleuchtungseinheit zur Beleuchtung eines Nummernschildes, wobei die Beleuchtungseinheit die Rückseite des Nummernschilds beleuchtet und die Beleuchtungseinheit einen transluzenten Körper aufweist. Der transluzente Körper der Beleuchtungseinheit ist über die Seitenflächen in das Heckelement eingefügt. Der Begriff "Seitenfläche" bezeichnet vorliegend die Fläche, die den transluzenten Körper senkrecht zur Vorder- oder Rückseite begrenzt. Im Allgemeinen ergibt sich die Seitenfläche aus der Dicke des transluzenten Körpers der Beleuchtungseinheit sowie dem Umfang der Vorderseite oder der Rückseite des transluzenten Körpers. Wird beispielsweise eine tafelförmige Beleuchtungseinheit verwendet, so ergeben sich zwei der Seitenflächen aus dem Produkt der Dicke der Tafel mit der Länge der Tafel und zwei der Seitenflächen aus dem Produkt der Dicke der Tafel mit der Breite der Tafel. Die Dicke stellt die geringste Längenausdehnung der Beleuchtungseinheit dar. Die Fläche der Vorderseite ergibt sich aus der zur Beleuchtung des Nummernschildes verwendbaren Fläche des transluzenten Körpers. Die Rückseite des transluzenten Körpers bezeichnet die Fläche, die zum Innenraum des Fahrzeuges ausgerichtet ist. Der Umfang des transluzenten Körpers ergibt sich bei einer Tafel beispielsweise aus der Summe der doppelten Länge des Körpers sowie der doppelten Breite des Körpers.

Aus den zuvor dargelegten Ausführungen ergibt sich, dass ein erfindungsgemäßes Heckelement mindestens ein weiteres Bauelement, das beispielsweise lackiert sein kann, aufweist, in das eine Aussparung eingearbeitet ist, in die der transluzente Körper der Beleuchtungseinheit eingepasst ist. Heckelemente gemäß dem Stand der Technik weisen eine derartige Aussparung nicht auf.

Der transluzente Körper der Beleuchtungseinheit kann beispielsweise kraftschlüssig, formschlüssig (z.B. durch mechanische Befestigungselemente) oder stoffschlüssig ( z.B. Verklebung oder durch Spritzguss) in das Heckelement eingefügt werden.

Zu den mechanischen Befestigungselementen, die zum Einfügen des transluzenten Körpers in das Heckelement eingesetzt werden können, gehören beispielsweise Schnapphacken, Schrauben und Schnappverschlüsse.

Eine bevorzugte Variante zum Einfügen des transluzenten Körpers in das Heckelement stellt das Verkleben dar. Das Kleben ist ein besonders kostengünstiges Fügeverfahren, welches sich insbesondere zur serienmäßigen Verbindung zweier Bauteile eignet und darüber hinaus eine Fülle an Vorteilen gegenüber anderen bekannten Fügeverfahren mit sich bringt, welche dem Fachmann bestens bekannt sind und auf welche daher an dieser Stelle ohne ihre weitere Diskussion verwiesen werden kann.

Als vorteilhaft hat sich insbesondere erwiesen, den transluzenten Körper in das Heckelement mittels einer oder mehrerer Klebeflächen zwischen den Seitenflächen des transluzenten Körpers oder einem Absatz der an den Seitenflächen vorgesehen ist und dem den transluzenten Körper umgebenen Bauteil des Heckelements zu verkleben, wobei die Klebefläche beispielsweise als umlaufende, geschlossene Klebelinie bzw. Klebefläche ausgestaltet sein kann, oder aber sich aus voneinander getrennt vorliegenden Klebeflächen zusammensetzen kann. Auch ein punktuelles Verkleben mittels einer Abfolge oder Reihe von Klebepunkten bzw. -flächen ist möglich und wird somit ebenfalls vorgeschlagen.

Die Klebeflächen des transluzenten Körpers bzw. dem Heckelement können hierbei in Bezug zueinander stumpf gestoßen werden oder einander überlappen. Der transluzente Körper kann jedoch auch in eine an dem entsprechenden Bauteil des Heckelements ausgestaltete Führung oder Abdichtung eingesteckt bzw. -geschoben werden und mit dieser derart verklebt werden, dass der transluzente Körper auf diese Weise fest mit dem entsprechenden Bauteil des Heckelements verbunden ist.

Zweckmäßig kann des Weiteren der transluzente Körper durch Spritzguß in das Heckelement eingefügt werden. Falls die weiteren Bestandteile des Heckelements ebenfalls aus Kunststoff gefertigt sind ist die Verwendung des Mehrkomponentenspritzgussverfahrens besonders wirtschaftlich und vorteilhaft, wobei beispielsweise zunächst das den transluzenten Körper umgebende Bauteil im Spritzgußwerkzeug geformt, d.h. vorgespritzt wird und anschließend der transluzente Körper in das erhaltene Formteil gespritzt wird.

Hierbei kann die Herstellung beispielsweise durch Einlege- oder Umsetzverfahren erfolgen. In diesem Verfahren wird zunächst das den transluzenten Körper umgebende Bauteil spritzgegossen und entformt. In einem zweiten, nach geschalteten separaten Spritzgießschritt wird dann z.B. dieser Vorspritzling in ein anderes Werkzeug mit einer ausgesparten Kavität eingelegt bzw. umgesetzt und der den transluzenten Körper bildende Kunststoff in das Werkzeug eingespritzt und dabei in bzw. auf den Vorspritzling gespritzt. Für die nachfolgend erreichbare Haftung ist es besonders vorteilhaft, wenn das vorgespritzte Formteil vorgewärmt wird, um ein Anschmelzen der Oberfläche durch die aufgespritzte Komponente und deren Eindringen in die Grenzschicht zu erleichtern. Hierbei kann die Temperatur des vorgespritzten Formteils bis knapp unter den Schmelzpunkt, der gemäß ISO 3146 Methode C 1 b bestimmt werden kann, erwärmt werden.

Das vorgespritzte Formteil kann aber auch nur teilentformt werden und zusammen mit einem Teil des ursprünglichen Werkzeugs [z.B. der Angußplatte, der Ausstoßerseite oder nur einer Indexplatte) in eine weitere größere Kavität bewegt werden.

Eine andere Möglichkeit besteht darin, die den transluzenten Körper bildende Komponente ohne Zwischenöffnen der Maschine und Weitertransport des Vorspritzlings in das gleiche Werkzeug einzuspritzen (2-Komponenten-Spritzguss). Dabei sind die für die den transluzenten Körper bildende Komponente vorgesehenen Werkzeughohlräume beim Einspritzen der ersten Komponente zunächst durch verschiebbare Einsätze oder Kerne verschlossen und werden erst zum Einspritzen der zweiten Komponente geöffnet (Schiebertechnik). Diese Verfahrensvariante ist auch zum Erzielen einer guten Haftung besonders vorteilhaft, da bereits nach kurzer Kühlzeit die Schmelze der zweiten Komponenten auf einen noch heißen Vorspritzling trifft.

Zur Verbesserung der Stabilität der Verbindung zwischen dem transluzenten Körper und dem Heckelement können die Seitenflächen der Beleuchtungseinheit einen Absatz aufweisen. Dementsprechend kann beispielsweise die Rückseite des transluzenten Körpers eine größere Fläche einnehmen als die Vorderseite des transluzenten Körpers. Der Absatz kann beispielsweise dazu dienen, den transluzenten Körper mit dem Heckelement zu verschrauben oder zu verkleben. Darüber hinaus kann Licht in den transluzenten Körper über den Absatz eingekoppelt werden, wodurch das Leuchtmittel besonders einfach zugänglich ist.

Gemäß einer zweckmäßigen Ausführungsform der vorliegenden Erfindung kann zwischen den Seitenflächen des transluzenten Körpers der Beleuchtungseinheit und dem Heckelement eine Dichtung vorgesehen sein. Hierdurch kann das Eindringen von Wasser in den Fahrzeuginnenraum zuverlässig verhindert werden. Die Dichtung kann, je nach Befestigungsart des transluzenten Körpers mit dem Heckelement, mechanisch oder durch Spritzguß fest in den Verbund eingefügt werden. Dichtungen können insbesondere aus thermoplastischen Elastomeren erhalten werden, die bevorzugt durch Spritzguß auf dem transluzenten Körper oder dem Heckelement aufgebracht werden können. Hierzu gehören insbesondere reine oder modifizierte Polyolefin-Elastomere (TPE-O) insbesondere Polypropylen-Elastomere, wie Ethylen/Propylen-Terpolymer / Propylen (PP-EPDM), vernetztes Ethylen/Propylen-Terpolymer / Propylen (PP-X/EPDM), Nitril-Butadien-Kautschuk/ Polypropylen (PP-NBR); vernetzte Polyolefin-Elastomere (TPE-V); Elastomere auf Basis von Polyetherester oder Polyesterester (TPE-E), Polyetherurethan-Elastorner und/oder Polyesterurethan-Elastomer (TPE-U); Polyetheramid-Elastomer (TPE-A) und/oder Styrol-Elastomer (TPE-S), insbesondere Styrol-Butadien-Styrol-Copolymere (SBS), Styrol-Ethylen-Butylen-Styrol-Copolymere (SEBS), Styrol-Ethylen-Propylen-Styrol-Copolymere (SEPS), Styrol-Isopren-Styrol-Copolymere (SIS).

Die erfindungsgemäße zu verwendende Beleuchtungseinheit umfaßt einen transluzenten Körper. Der Begriff " transluzent" bedeutet, dass Licht den Körper passieren kann, um das Nummernschild zu beleuchten. Gemäß einer bevorzugten Ausführungsform weist der transluzente Formkörper vorzugsweise eine Transmission im Bereich von 20% bis 92%, bevorzugt von 80% bis 92% auf, ohne dass hierdurch eine Beschränkung erfolgen soll. Die Transmission kann gemäß DIN 5036 bestimmt werden.

Zu den geeigneten transluzenten Körpern gehören insbesondere Lichtleitkörper sowie diffus ausgestaltete Kunststoffkörper.

Lichtleitkörper weisen mindestens eine Lichteinleitungsfläche und mindestens eine Lichtaustrittsfläche auf. Der Begriff Lichtaustrittsfläche kennzeichnet hierbei eine Fläche des Lichtleitkörpers, die geeignet ist Licht abzustrahlen. Hierzu gehört vorliegend insbesondere die Vorderseite des Lichtleitkörpers, die vom Fahrzeug abgewandt ist und das Nummernschild von der Rückseite beleuchtet. Die Lichteinleitungsfläche wiederum ist in der Lage Licht in den Körper aufzunehmen, so dass die lichtleitende Schicht das eingeleitete Licht über die gesamte Lichtaustrittsfläche verteilen kann. Die Lichteinleitung erfolgt vorliegend insbesondere über die Seitenflächen des Lichtleitkörpers. Die lichtleitende Schicht weist vorzugsweise eine Dicke von mindestens 1 mm, besonders bevorzugt mindestens 2 mm auf. Die Auskoppelung des Lichts kann beispielsweise durch Strukturierungen der Lichtaustrittsfläche oder durch Streupartikel, beispielsweise Bariumsulfat, Titandioxid oder organische Streuperlen, die beispielsweise auf vernetzen Styrolpartikeln basieren, erzielt werden, die im Lichtleitkörper enthalten sind, so dass Licht über die gesamte Lichtaustrittsfläche austritt. Besonders bevorzugte organische Streuperlen sind unter anderem von Sekisui unter dem Handelsnamen ®Techpolymer SBX-8 und ®Techpolymer SBX-12 erhältlich.

Hierbei kann das Verhältnis von Lichtaustrittsfläche zu Lichteinleitungsfläche mindestens 2, vorzugsweise mindestens 10 und besonders bevorzugt mindestens 20 betragen.

Das Licht wird im Allgemeinen in etwa normal zur Lichtausbreitungsrichtung ausgekoppelt, wobei die Menge an ausgekoppeltem Licht von der Menge an Streupartikeln in der Kunststoffmatrix bzw. der Stärke der Oberflächenstrukturierungen abhängig ist. Je größer diese Menge, desto mehr Licht wird ausgekoppelt. Hieraus ergibt sich, dass die Menge an von Größe der Lichtaustrittsfläche abhängig ist. Je weiter die Ausdehnung des Lichtleitkörpers senkrecht zur Lichteinleitungsfläche ist, desto geringer wird die Menge an Streupartikeln in der lichtleitenden Schicht gewählt.

Vorzugsweise wird der Lichtleitkörper aus einem transparenten Kunststoff hergestellt. Zu den transparenten Kunstoffen gehören insbesondere Polycarbonate, Polymethylmethacrylate, Polybuyrate, Polystyrole, insbesondere syndiotaktische Polystyrol-Copolymere. Von besonderem Interesse sind insbesondere Kunststoffe, die vorzugsweise 0,0001 Gew.-% bis 2 Gew.-%, besonders bevorzugt 0,0005 Gew.-% bis 1 Gew.-% Streupartikel umfassen.

Geeignete Lichtleitkörper können kommerziell beispielsweise von Röhm GmbH unter der Handelsbezeichnung Plexiglas® EndLighten erhalten werden.

Der Lichtleitkörper weist vorzugsweise hervorragende mechanische und thermische Eigenschaften auf. Diese Eigenschaften umfassen insbesondere eine Vicat-Erweichungstemperatur nach ISO 306 (B50) von vorzugsweise mindestens 85°C, eine Kerbschlagzähigkeit KSZ (Izod 180/1 eA, 1,8 MPa) nach ISO 180 von vorzugsweise mindestens 2,0 kJ/m² bei 20°C und ein E-Modul nach ISO 527-2 von vorzugsweise mindestens 1500 MPa. Die Transmission des Lichtleitkörpers liegt vorzugsweise im Bereich von 80% bis 92%, bevorzugt von 85% bis 92%.

Die Größe des Lichtleitkörpers unterliegt keiner besonderen Einschränkung, wobei die Fläche vorzugsweise in etwa der auszuleuchtenden Fläche des Nummernschilds entsprechen kann, da kleinere Lichtleitkörper zu einer schlechten Ausleuchtung des Nummernschildsführen können, wohingegen größere Lichtleitkörper zu höheren Kosten führen, jedoch nicht mit zusätzlichen Vorteilen verbunden sind. Die Dicke des Lichtleitkörpers ist vielfach von der spezifischen Technik abhängig, mit der der Lichtleitkörper beleuchtet wird. Von besonderem Interesse können insbesondere Lichtleitkörper sein, die eine Dicke im Bereich von 1 mm bis 2 cm, besonders bevorzugt 2 mm bis 1 cm aufweisen.

Von besonderem Interesse sind des Weiteren transluzente Körper, die durch einen diffus ausgestalteten Kunststoffkörper gebildet werden. Diese Kunststoffkörper werden ebenfalls vorzugsweise durch einen transparenten Kunststoff gebildet, die beispielhaft zuvor dargelegt wurden. Besonders bevorzugt umfaßt der diffus ausgestaltete Kunststoffkörper mindestens 50 Gew.-% PMMA. In diese diffus ausgestalteten Kunststoffkörper wird Licht über die Rückseite eingestrahlt, wobei die Lichtquelle an sich vorzugsweise nicht von der Vorderseite her erkannt werden kann. Diese Eigenschaft kann durch Streupartikel erzielt werden, wobei der Anteil an Streupartikeln im Kunststoff vorzugsweise im Bereich von 0,5 Gew.-% bis 20 Gew.-%, besonders bevorzugt im Bereich von 1 Gew.-% bis 12 Gew.-% liegt. Bevorzugte Streupartikel wurden zuvor dargelegt, wobei in diesem Zusammenhang bevorzugt organische Streupartikel eingesetzt werden.

Der diffus ausgestaltete Kunststoffkörper weist vorzugsweise hervorragende mechanische und thermische Eigenschaften auf. Diese Eigenschaften umfassen insbesondere eine Vicat-Erweichungstemperatur nach ISO 306 (B50) von vorzugsweise mindestens 85°C, eine Charpy-Schlagzähigkeit nach ISO 179 von vorzugsweise mindestens 15 kJ/m² bei 23°C und ein Zug-Modul nach ISO 527-2 (1 mm/min) von vorzugsweise mindestens 1700 MPa. Die Transmission des diffus ausgestalteten Kunststoffkörpers liegt vorzugsweise im Bereich von 75% bis 92%, bevorzugt von 80% bis 90%.

Kunststoffe, die zur Herstellung von diffus ausgestalteten Kunststoffkörpern geeignet sind, können kommerziell beispielsweise von Röhm GmbH unter den Handelsbezeichnung Plexiglas® df22 7N, df23 7N, df22 7H, df23 7H, df21 8N, df22 8N, df23 8N, df22 zk6BR und df23 zk6BR erhalten werden.

Neben dem transluzenten Körper weist die Beleuchtungseinheit mindestens ein Leuchtmittel auf. Zu den geeigneten Leuchtmittel gehören beispielsweise Glühbirnen, Leuchtdioden oder Leuchtfolien. Bevorzugt beträgt die Leuchtkraft der Leuchtmittel 0,1 bis 100, besonders bevorzugt 1 bis 30 Candela pro qm².

Von besonderem Interesse sind insbesondere Ausführungsformen des erfindungsgemäßen Heckelements, die mindestens zwei Leuchtmittel umfassen, die unterschiedliche Farben auf dem Nummernschild erzeugen. Hierdurch kann beispielsweise der nachfolgende Verkehr vor Gefahren gewarnt werden. Daher können gemäß dieser Ausgestaltung neben weißem oder gelbem Licht bevorzugt auch rotes oder oranges Licht erzeugt werden.

Darüber hinaus kann die Beleuchtungseinheit weitere Bauteile umfassen, wie beispielsweise ein Gehäuse, das den transluzenten Körper sowie das Leuchtmittel gegen den Innenraum des Fahrzeugs abschließt.

Das Nummernschild kann auf jede bekannte Weise oberhalb des transluzenten Körpers der Beleuchtungseinheit angebracht werden. Beispielsweise kann das Heckelement einen Rahmen zum Befestigen eines Nummernschildes aufweisen. Dieser Rahmen kann beispielsweise durch Spritzguß auf dem Heckelement erzeugt werden. Weiterhin kann der Rahmen auf dem Heckelement angeklebt werden. Besonders zweckmäßig kann das Nummernschild durch Verkleben mit dem Heckelement verbunden werden.

Ein weiterer Gegenstand der vorliegenden Erfindung ist ein Kraftfahrzeug, das ein erfindungsgemäßes Heckelement umfaßt. Von besonderem Interesse sind insbesondere Kraftfahrzeuge, die ein Nummernschild aufweisen, das auf das Beleuchtungselement aufgeklebt wurde.

Besonders geeignete Nummernschilder umfassen neben einer Klebeschicht mindestens eine transluzente, retroreflektierende Schicht. Derartige Schichten sind für rückseitig auftreffendes Licht durchlässig, während sie Licht reflektieren, dass auf ihre Vorderseite fällt. Um diese Eigenschaften aufzuweisen, können diese Schichten beispielsweise Streukörper, beispielsweise versilberte Glashalbkugeln, oder Strukturen aufweisen. Die Art des Materials, aus dem diese Schichten hergestellt werden, ist an sich unkritisch, wobei transparente Kunststoffe bevorzugt sind, die beispielhaft zuvor dargelegt wurden.

Retroreflektierende Folien bzw. Schichten, die Strukturen, beispielsweise Prismen oder Würfeleckmuster umfassen können, sind unter anderem in US 4,588,258, US 5,122,902, WO 98/20375 und DE 699 04 512T beschrieben. Mit Streukörpem ausgestattete Folien werden in der Druckschrift US 4,005,538 dargelegt.

Diese Schichten können insbesondere in Form von Folien unter der Handelsbezeichnung Scotchlite® von 3M erworben werden.

Nachfolgend wird die vorliegende Erfindung anhand der Figuren 1 bis 6 beschrieben, ohne dass hierdurch eine Beschränkung der Erfindung erfolgen soll. Hierbei zeigen
Figur 1 eine schematische Querschnittzeichnung eines Heckelements gemäß dem Stand der Technik;
Figur 2 eine schematische Querschnittzeichnung eines erfindungsgemäßen Heckelements;
Figur 3 eine perspektivische Explosionsdarstellung eines Heckelements mit einer Beleuchtungseinheit sowie ein Nummemschild;
Figur 4 eine schematische Querschnittzeichnung zum Verbinden des transluzenten Körpers mit dem Heckelement;
Figur 5 eine schematische Querschnittzeichnung des transluzenten Körpers mit einem Absatz und
Figur 6 zwei Varianten zum Beleuchten des transluzenten Körpers, wobei die Position des Leuchtmittel schematisch dargestellt sind.

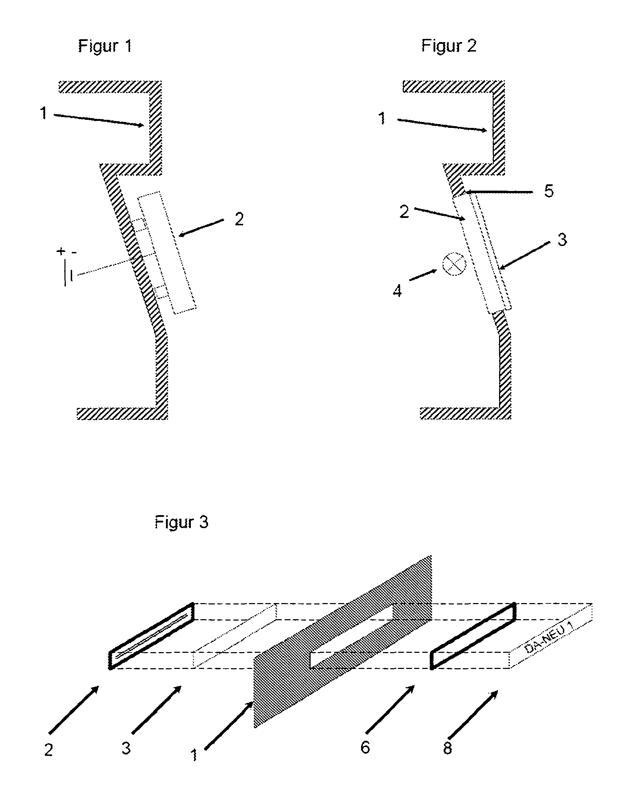

Figur 1 zeigt eine schematische Querschnittzeichnung eines Heckelements (1), vorliegend eine Heckklappe gemäß dem Stand der Technik. Hierbei wird die Beleuchtungseinheit (2) des Nummernschilds auf die Heckklappe angebracht, so dass diese kein integraler Bestandteil der Heckklappe darstellt, sondern als Anbauteil betrachtet werden muss.

Im Gegensatz hierzu wird in Figur 2 ein Heckelement (1), vorliegend eine Heckklappe gemäß der vorliegenden Erfindung beschrieben. Die Beleuchtungseinheit (2), die einen transluzenten Körper (3) sowie ein Leuchtmittel (4) umfaßt, bildet einen integralen Bestandteil des Heckelements (1). Hierbei wird der transluzente Körper (3) über die Seitenflächen (5) in die Heckklappe eingefügt.

Zur Veranschaulichung dieses Aufbaus zeigt Figur 3 eine perspektivische Explosionsdarstellung eines Heckelements (1), vorliegend eine Heckklappe, mit einer Beleuchtungseinheit (2). Die Heckklappe (1) umfaßt in der vorliegenden Ausführungsform ein Bauteil, in das der transluzente Körper (3) eingefügt wird. Dieses Bauteil kann als Rahmen für den transluzenten Körper aufgefaßt werden. Rückseitig, das heißt zum Innenraum des Fahrzeugs ausgerichtet, kann ein Gehäuse der Beleuchtungseinheit (2) vorgesehen sein, in das das Leuchtmittel eingefügt wird. Die Heckklappe (1) kann auf der Vorderseite mit einem Rahmen (6) versehen werden, um ein Nummernschild (8) zu befestigen.

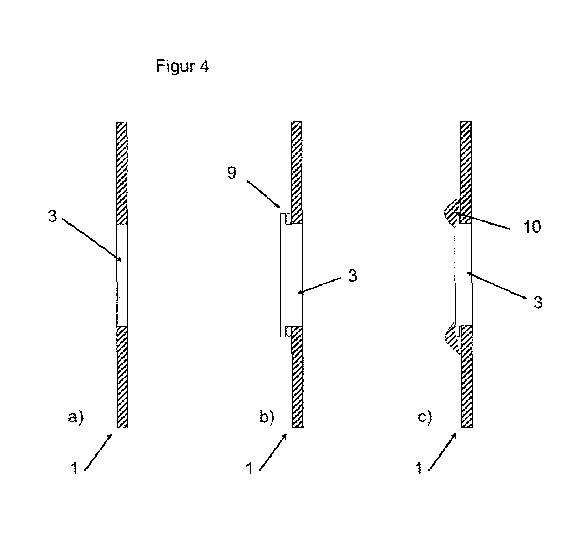

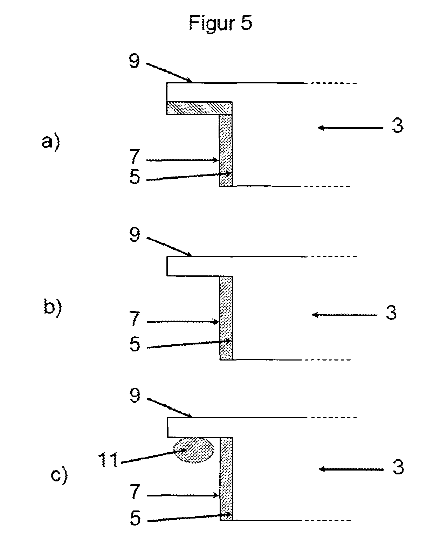

In Figur 4 sind verschiedene Ausführungsformen zum Einfügen des transluzenten Körpers (3) in das Heckelement (1) dargelegt. Gemäß Figur 4a kann der transluzente Körper beispielsweise kraftschlüssig in das Heckelement eingefügt werden. Weiterhin kann eine Verklebung des transluzenten Körpers (3) erfolgen, um in diesen fest in das Heckelement (1) einzubinden, wie in Figur 4b dargestellt. Vorzugsweise kann der transluzente Körper (3) hierzu beispielsweise einen Absatz (9) aufweisen, der in den Seitenflächen (5) vorgesehen ist. In dieser Ausführungsform ist die Klebestelle zwischen der Rückseite des rahmenförmigen Bauteils des Heckelements und der Vorderseite des Absatzes (9) vorgesehen. Dies wird nachfolgend in Figur 5c in einer vergrößerten Darstellung detaillierter ausgeführt. In Figur 4c ist insbesondere eine Ausführungsform dargestellt, in der der transluzente Körper (3) durch Schnapphaken (10) in das Heckelement (1) eingefügt ist.

Die Figuren 5a bis 5c zeigen schematische Querschnittzeichnungen des transluzenten Körpers (3) mit einem Absatz (9), wobei die Seitenflächen (5) der transluzenten Körper (3) jeweils mit einer Dichtung (7) versehen sind, die in der vorliegenden Ausführungsform durch Spritzguß eines thermoplastischen Elastomeren aufgebracht wurde. Hierbei kann die Dichtung die Oberfläche des Absatzes (9) vollständig bedecken, wie in Figur 5a dargelegt. Weiterhin kann die Dichtung (7) lediglich die Seitenflächen des Absatzes (9) abdecken, wie in Figur 5b beschrieben. In einer besonders zweckmäßigen Ausführungsform kann eine Dichtung (7) die Seitenflächen des Absatzes (9) bedecken, wobei auf der Vorderseite des Absatzes (9) Klebstoff (11) aufgebracht werden kann, um den transluzenten Körper (3) in das Heckelement (1) einzufügen.

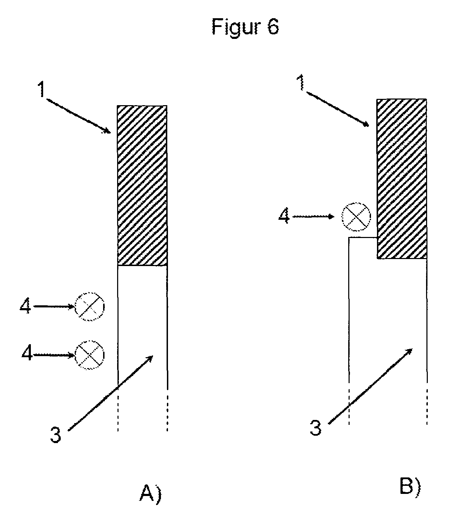

In Figur 6 sind zwei Varianten zum Beleuchten des transluzenten Körpers beschrieben, wobei die Position des Leuchtmittels schematisch dargestellt ist. So erzeugt beispielsweise Figur 6A eine Ausführungsform, in der das Licht durch Leuchtmittel (4) von der Rückseite in den transluzenten Körper eingestrahlt wird. In der in Figur 6B dargestellten Ausführungsform wird das Licht über die Seitenfläche des transluzenten Körpers (3) eingekoppelt.

## Patentansprüche

1. Heckelement (1) für ein Kraftfahrzeug umfassend eine Beleuchtungseinheit (2) zur Beleuchtung eines Nummernschildes, wobei die Beleuchtungseinheit (2) die Rückseite des Nummernschilds beleuchtet und die Beleuchtungseinheit (2) einen transluzenten Körper (3) und ein Leuchtmittel (4) aufweist,
**dadurch gekennzeichnet, dass**
der transluzente Körper der Beleuchtungseinheit (2) über die Seitenflächen (5) in das Heckelement (1) eingefügt ist.

2. Heckelement gemäß Anspruch 1,
**dadurch gekennzeichnet, dass**
das Heckelement (1) aus Kunststoff gefertigt ist und/oder dass
das Heckelement (1) eine Heckklappe ist.

3. Heckelement gemäß mindestens einem der vorhergehenden Ansprüche,
**dadurch gekennzeichnet, dass**
der transluzente Körper (3) der Beleuchtungseinheit (2) ein Lichtleitkörper ist, in den Licht über die Seitenflächen eingestrahlt wird, wobei der Lichtleitkörper bevorzugt aus einem Streupartikel umfassenden Kunststoff hergestellt ist, der besonders bevorzugt 0,0001 bis 2 Gew.-% Streupartikel umfasst.

4. Heckelement gemäß mindestens einem der vorhergehenden Ansprüche 1 oder 2,
**dadurch gekennzeichnet, dass**
der transluzente Körper (3) der Beleuchtungseinheit (2) ein diffus ausgestalteter Kunststoffkörper ist, in den Licht über die Rückseite eingestrahlt wird, wobei der diffus ausgestaltete Kunststoff bevorzugt 0,5 Gew.-% bis 20 Gew.-% Streupartikel umfasst.

5. Heckelement gemäß mindestens einem der vorhergehenden Ansprüche,
**dadurch gekennzeichnet, dass**
der transluzente Körper (3) der Beleuchtungseinheit (2) kraftschlüssig in das Heckelement eingefügt ist.

6. Heckelement gemäß mindestens einem der vorhergehenden Ansprüche,
**dadurch gekennzeichnet, dass**
der transluzente Körper (3) der Beleuchtungseinheit (2) durch mechanische Befestigungselemente und/oder durch Verklebung oder durch Spritzguss in das Heckelement eingefügt ist.

7. Heckelement gemäß Anspruch 6,
**dadurch gekennzeichnet, dass**
der transluzente Körper (3) der Beleuchtungseinheit (2) durch Einlege- oder Umsetzverfahren oder durch 2-Komponenten-Spritzguss in das Heckelement eingefügt ist.

8. Heckelement gemäß mindestens einem der vorhergehenden Ansprüche,
**dadurch gekennzeichnet, dass**
das Heckelement (1) einen Rahmen (6) zum Befestigen eines Nummernschildes aufweist.

9. Heckelement gemäß Anspruch 8,
**dadurch gekennzeichnet, dass**
der Rahmen (6) zum Befestigen eines Nummernschildes durch Verkleben mit dem Heckelement (1) verbunden ist oder dass
der Rahmen (6) zum Befestigen eines Nummernschildes durch Spritzguss auf dem Heckelement (1) erzeugt wurde.

10. Heckelement gemäß mindestens einem der vorhergehenden Ansprüche,
**dadurch gekennzeichnet, dass**
die Seitenflächen (5) des transluzenten Körpers (3) der Beleuchtungseinheit (2) zumindest teilweise mit einer Dichtung (7) in Kontakt steht.

11. Heckelement gemäß Anspruch 10,
**dadurch gekennzeichnet, dass**
die Dichtung (7) durch Spritzguss erzeugt wurde.

12. Heckelement gemäß mindestens einem der vorhergehenden Ansprüche,
**dadurch gekennzeichnet, dass**
die Beleuchtungseinheit (2) mindestens zwei Leuchtmittel (4) umfaßt, die unterschiedliche Farben auf dem Nummernschild erzeugen.

13. Kraftfahrzeug umfassend ein Heckelement gemäß mindestens einem der Ansprüche 1 bis 12.

14. Kraftfahrzeug gemäß Anspruch 13,
**dadurch gekennzeichnet, dass**
das Kraftfahrzeug ein Nummernschild (8) aufweist, das auf das Beleuchtungselement aufgeklebt wurde.

15. Kraftfahrzeug gemäß Anspruch 13 oder 14,
**dadurch gekennzeichnet, dass**
das Kraftfahrzeug ein Nummernschild (8) aufweist, das eine transluzente, retroreflektierende Schicht umfasst.

## Claims

1. Rear-end element (1) for a motor vehicle encompassing an illumination unit (2) for the illumination of a number plate, where the illumination unit (2) illuminates the rear side of the number plate and the illumination unit (2) has a translucent body (3) and an illuminant (4),
**characterized in that**
the translucent body of the illumination unit (2) has been introduced by way of the side areas (5) into the rear-end element (1).

2. Rear-end element according to Claim 1,
**characterized in that**
the rear-end element (1) has been manufactured from plastic and/or **in that**
the rear-end element (1) is a rear flap.

3. Rear-end element according to at least one of the preceding claims,
**characterized in that**
the translucent body (3) of the illumination unit (2) is an optically conductive body into which light is irradiated by way of the side areas, where the optically conductive body has preferably been produced from a plastic encompassing scattering particles which particularly preferably encompasses from 0.0001 to 2% by weight of scattering particles.

4. Rear-end element according to at least one of the preceding Claims 1 or 2,
**characterized in that**
the translucent body (3) of the illumination unit (2) is a plastics body designed with diffusing properties, into which light is irradiated by way of the rear side, where the plastic designed with diffusing properties preferably encompasses from 0.5% by weight to 20% by weight of scattering particles.

5. Rear-end element according to at least one of the preceding claims,
**characterized in that**
the translucent body (3) of the illumination unit (2) has been introduced into the rear-end element in such a way that it is held by frictional forces.

6. Rear-end element according to at least one of the preceding claims,
**characterized in that**
the translucent body (3) of the illumination unit (2) has been introduced into the rear-end element via mechanical fastening elements and/or via adhesive bonding or via injection molding.

7. Rear-end element according to Claim 6,
**characterized in that**
the translucent body (3) of the illumination unit (2) has been introduced into the rear-end element via insert or conversion methods or via 2-component injection moulding.

8. Rear-end element according to at least one of the preceding claims,
**characterized in that**
the rear-end element (1) has a frame (6) for the fastening of a number plate.

9. Rear-end element according to Claim 8,
**characterized in that**
the frame (6) for the fastening of a number plate has been bonded to the rear-end element (1) via adhesive bonding or **in that**
the frame (6) for the fastening of a number plate was produced on the rear-end element (1) via injection moulding.

10. Rear-end element according to at least one of the preceding claims,
**characterized in that**
the side areas (5) of the translucent body (3) of the illumination unit (2) are at least to some extent in contact with a gasket (7).

11. Rear-end element according to Claim 10,
**characterized in that**
the gasket (7) was produced by injection moulding.

12. Rear-end element according to at least one of the preceding claims,
**characterized in that**
the illumination unit (2) encompasses at least two illuminants (4) which produce different colours on the number plate.

13. Motor vehicle encompassing a rear-end element according to at least one of Claims 1 to 12.

14. Motor vehicle according to Claim 13,
**characterized in that**
the motor vehicle has a number plate (8) which was adhesive-bonded to the illumination element.

15. Motor vehicle according to Claim 13 or 14,
**characterized in that**
the motor vehicle has a number plate (8) which encompasses a translucent, retroreflective layer.

## Revendications

1. Elément arrière (1) pour véhicule automobile, comprenant une unité d'éclairage (2) qui éclaire une plaque d'immatriculation, l'unité d'éclairage (2) éclairant le côté arrière de la plaque d'immatriculation et l'unité d'éclairage (2) présentant un corps translucide (3) et un moyen d'éclairage (4), **caractérisé en ce que**
le corps translucide de l'unité d'éclairage (2) est inséré dans l'élément arrière (1) par ses surfaces latérales (5).

2. Elément arrière selon la revendication 1, **caractérisé en ce que** l'élément arrière (1) est réalisé en matière synthétique et/ou **en ce que** l'élément arrière (1) est un hayon arrière.

3. Elément arrière selon au moins l'une des revendications précédentes, **caractérisé en ce que** le corps translucide (3) de l'unité d'éclairage (2) est un corps conducteur de lumière dans lequel de la lumière est injectée par les surfaces latérales, le corps conducteur de lumière étant de préférence réalisé en une matière synthétique qui comprend des particules diffusantes et qui comprend de façon particulièrement préférable de 0,0001 à 2 % en poids de particules diffusantes.

4. Elément arrière selon au moins l'une des revendications 1 et 2 qui précèdent, **caractérisé en ce que** le corps translucide (3) de l'unité d'éclairage (2) est un corps en matière synthétique diffusante dans lequel la lumière est injectée par le côté arrière, la matière synthétique diffusante comprenant de préférence de 0 , 5 % en poids à 20% en poids des particules diffusantes.

5. Elément arrière selon au moins l'une des revendications précédentes, **caractérisé en ce que** le corps translucide (3) de l'unité d'éclairage (2) est inséré dans l'élément en correspondance mécanique arrière.

6. Elément arrière selon au moins l'une des revendications précédentes, **caractérisé en ce que** le corps translucide (3) de l'unité d'éclairage (2) est inséré dans l'élément arrière par l'intermédiaire d'éléments de fixation mécanique et/ou par collage ou par moulage par injection.

7. Elément arrière selon la revendication 6, **caractérisé en ce que** le corps translucide (3) de l'unité d'éclairage (2) est inséré dans l'élément arrière par une opération d'insertion ou de conversion ou par un moulage par injection de 2 composants.

8. Elément arrière selon au moins l'une des revendications précédentes, **caractérisé en ce que** l'élément arrière (1) présente un encadrement (6) qui permet de fixer une plaque d'immatriculation.

9. Elément arrière selon la revendication 8, **caractérisé en ce que** l'encadrement (6) destiné à fixer une plaque d'immatriculation est relié à l'élément arrière (1) par collage ou **en ce que** l'encadrement (6) destiné à fixer une plaque d'immatriculation est formé par moulage par injection sur l'élément arrière (1).

10. Elément arrière selon au moins l'une des revendications précédentes, **caractérisé en ce que** les surfaces latérales (5) du corps translucide (3) de l'unité d'éclairage (2) sont au moins partiellement en contact avec un joint d'étanchéité (7).

11. Elément arrière selon la revendication 10, **caractérisé en ce que** le joint d'étanchéité (7) a été formé par moulage par injection.

12. Elément arrière selon au moins l'une des revendications précédentes, **caractérisé en ce que** l'unité d'éclairage (2) comporte au moins deux moyens d'éclairage (4) qui forment des couleurs différentes sur la plaque d'immatriculation.

13. Véhicule automobile qui comprend un élément arrière selon au moins l'une des revendications 1 à 12.

14. Véhicule automobile selon la revendication 13, **caractérisé en ce que** le véhicule automobile présente une plaque d'immatriculation (8) qui a été collée sur l'élément d'éclairage.

15. Véhicule automobile selon les revendications 13 ou 14, **caractérisé en ce que** le véhicule automobile présente une plaque d'immatriculation (8) qui comporte une couche translucide et rétro-réfléchissante.
